# EUROPEAN PATENT APPLICATION

(11) **EP 3 961 010 A1**
(43) Date of publication of application: **02.03.2022**
(21) Application number: 21190012.1
(22) Date of filing: 06.08.2021
(51) Int. Cl.: F02B 23/06, F02B 23/02

(54) **ENGINE**

(30) Priority: 01.09.2020 JP 2020146859
(71) Applicant: MAZDA MOTOR CORPORATION, Hiroshima 730-8670 (JP)
(72) Inventor: KURAMOCHI, Akira, Fuchu-cho, Aki-gun, 730-8670 (JP); HARADA, Yuji, Fuchu-cho, Aki-gun, 730-8670 (JP); NAGASAWA, Takeshi, Fuchu-cho, Aki-gun, 730-8670 (JP); SETO, Masatoshi, Fuchu-cho, Aki-gun, 730-8670 (JP); HORI, Junki, Fuchu-cho, Aki-gun, 730-8670 (JP); KOSHIRO, Yudai, Fuchu-cho, Aki-gun, 730-8670 (JP); KOGA, Yoshiyuki, Fuchu-cho, Aki-gun, 730-8670 (JP); YAMASHITA, Hiroyuki, Fuchu-cho, Aki-gun, 730-8670 (JP)
(74) Representative: Müller-Boré & Partner Patentanwälte PartG mbB

(57) **Abstract**

An engine is provided, which includes a combustion chamber defined by a cylinder head and a piston inside a cylinder of a cylinder block, a fuel injection nozzle provided to the cylinder head and formed in a tip-end part with a plurality of injection holes from which fuel is injected into the combustion chamber, the tip-end part being exposed to the combustion chamber, and a passage-forming member formed with a passage through which the injected fuel passes. The injection holes include first and second injection holes, and the passage-forming member is disposed around the tip-end part of the nozzle so as to cause a difference between a speed at which fuel injected from the first injection hole flows toward a circumferential part of the combustion chamber, and a speed at which fuel injected from the second injection hole flows toward the circumferential part.

## Description

### TECHNICAL FIELD

The present disclosure relates to an engine, particularly a structure of a combustion chamber of an engine.

### BACKGROUND OF THE DISCLOSURE

Conventionally, structures of a combustion chamber of an engine are known, in which the combustion chamber is formed between a cylinder head and a piston. For example, JP2020-007977A discloses this type of structure of a combustion chamber of an engine. An internal combustion engine disclosed in JP2020-007977A is provided with a cylinder block, a piston, and a cylinder head. A combustion chamber is defined by a cylinder bore surface of the cylinder block, a top surface of the piston, a combustion-chamber ceiling surface of the cylinder head, and bottom surfaces of intake and exhaust valves.

The internal combustion engine of JP2020-007977A is further provided with a fuel injection nozzle and ducts. The fuel injection nozzle has a tip-end part exposed to the combustion chamber. The tip-end part is formed with injection holes. Each duct is provided corresponding to the injection hole. Inside the duct, a flow-adjusting passage is formed. Fuel injected from the injection hole passes through the flow-adjusting passage, and then, is discharged into the combustion chamber.

In JP2020-007977A, the duct is provided so that, in the process where fuel spray of the injected fuel passes through the duct, premixing of the fuel spray and filled air can be facilitated while suppressing self-ignition, and thus, generation of smoke due to the self-ignition of over-concentrated fuel before homogenization can be reduced.

However, according to the configuration of JP2020-007977A, the fuel spray after passing through the respective injection nozzles may not have many chances to collide with each other, and thus, it is difficult that the entire fuel is efficiently mixed with the filled air.

### SUMMARY

One purpose of the present disclosure is to facilitate efficient mixing of the entire fuel with air inside the combustion chamber.

According to one aspect of the present disclosure, an engine is provided, which includes a combustion chamber defined by a cylinder head and a piston inside a cylinder of a cylinder block, a fuel injection nozzle provided to the cylinder head and formed in a tip-end part with a plurality of injection holes from which fuel is injected into the combustion chamber, the tip-end part being exposed to the combustion chamber, and a passage-forming member formed with a passage through which the fuel injected from the injection hole passes. The plurality of injection holes include a first injection hole and a second injection hole. The passage-forming member is disposed around the tip-end part of the fuel injection nozzle so as to cause a difference between a speed at which fuel injected from the first injection hole flows toward a circumferential part of the combustion chamber, and a speed at which fuel injected from the second injection hole flows toward the circumferential part of the combustion chamber. Particularly, the passage-forming member is configured to cause the difference between the speed at which fuel injected from the first injection hole flows toward the circumferential part of the combustion chamber, and the speed at which fuel injected from the second injection hole flows toward the circumferential part of the combustion chamber.

According to this structure, the fuel injected from one of the first injection hole and the second injection hole priorly spreads inside the combustion chamber, and to this fuel spray, the fuel injected from the other of the first injection hole and the second injection hole collides. Accordingly, spatial turbulence of the fuel spray occurs inside the combustion chamber. As a result, the entire fuel is easily mixed with air inside the combustion chamber efficiently.

The passage formed in the passage-forming member may include a passage through which only the fuel injected from the first injection hole passes in a direction of the injection.

According to this structure, by the fuel flowing in the passage-forming member, compared to the structure without the passage-forming member, the fuel easily flows promptly. As a result, it becomes easier to set the difference between the speed at which the fuel injected from the first injection hole flows toward the circumferential part of the combustion chamber, and the speed at which the fuel injected from the second injection hole flows toward the circumferential part of the combustion chamber.

The passage of the passage-forming member may include an enlarged part increasing, continuously increasing, or gradually increasing in a cross-sectional area thereof from an upstream side to a downstream side of the passage.

According to this structure, while the fuel is acted upon by the Coanda effect to flow along the inner surface of the passage-forming member, since the cross-sectional area of the enlarged part increases, continuously increases, or gradually increases to the downstream side of the passage, the fuel easily flows toward the downstream end while spreading. Therefore, when the fuel is discharged from the passage-forming member, it becomes easier for the fuel to spread radially outward of the passage. As a result, mixing of the fuel with air inside the combustion chamber becomes easier.

The passage-forming member may be formed, in the passage, with a narrowed part on the upstream side of the enlarged part so as to decrease, continuously decrease, or gradually decrease in a cross-sectional area thereof and continue to an upstream end of the enlarged part.

According to this structure, since the cross-sectional area of the passage through which the fuel passes is reduced at the narrowed part, turbulence occurs in the flow of the fuel as a result of the fuel passing through the narrowed part, thereby the fuel easily being split finely. As a result, the central part of the fuel is prevented from becoming high in its concentration, and the concentration of the fuel is homogenized, which enables uniform mixing.

The narrowed part may be positioned upstream of the midpoint in the passage.

According to this structure, a sufficient length of the enlarged part can be easily secured on the downstream of the narrowed part. Since the enlarged part has a sufficient length, the fuel is more easily affected by the Coanda effect and smoothly flows along the inner surface of the passage-forming member. Moreover, since the downstream end of the enlarged part sufficiently spreads radially outwardly, when the fuel is discharged from the enlarged part, it can sufficiently spread radially outward of the passage.

The enlarged part may be comprised of a first enlarged part increasing, continuously increasing, or gradually increasing in a cross-sectional area thereof toward the downstream side, and a second enlarged part provided downstream of the first enlarged part to continue from the first enlarged part, and of which a rate of increase in a cross-sectional area thereof toward the downstream side is higher than the first enlarged part. Particularly, a rate of increase of the second enlarged part in a cross-sectional area thereof toward the downstream side is higher than the first enlarged part (or higher than a rate of increase of the first enlarged part in a cross-sectional area of the first enlarged part toward the downstream side).

According to this structure, when the fuel is discharged from the second enlarged part of the passage-forming member, it becomes easier for the fuel to spread radially outward of the passage. As a result, mixing of the fuel with air inside the combustion chamber becomes easier.

The first enlarged part and the second enlarged part may be smoothly connected to each other.

According to this structure, the fuel smoothly flows, by the Coanda effect, along the inner surface of the passage-forming member. As a result, the fuel is easily spread radially outward of the passage.

The cylinder head may be formed, in the combustion-chamber ceiling surface of the cylinder head, with a concave part configured to accommodate a part of the passage-forming member. The passage-forming member may be disposed at the concave part.

According to this structure, it becomes possible to bring a top dead center of the piston disposed in the cylinder block closer to the cylinder head, which can increase a compression ratio of the engine.

The structure of the combustion chamber may further include a first passage-forming part formed with a passage through which the fuel injected from the first injection hole passes, and a second passage-forming part formed with a passage through which the fuel injected from the second injection hole passes. Particularly, at least one of a radius and a length may be different between the passage of the first passage-forming part and the passage of the second passage-forming part.

According to this structure, by suitably designing the radius or the length of the passages of the first passage-forming part and the second passage-forming part, the difference between the speed at which the fuel injected from the first injection hole flows toward the circumferential part of the combustion chamber, and the speed at which the fuel injected from the second injection hole flows toward the circumferential part of the combustion chamber, can freely be set. As a result, the entire fuel is easily mixed with air inside the combustion chamber efficiently.

The structure of the combustion chamber may further include a passage-forming unit in a circular ring shape and alternately having the first passage-forming part and the second passage-forming part in a circumferential direction.

According to this structure, the positioning between the injection holes of the fuel injection nozzle and the passage-forming member becomes easier.

The first passage-forming part and the second passage-forming part may be alternately disposed in a circumferential direction centering on a center axis of the fuel injection nozzle.

According to this, the difference between the speed at which the fuel injected from the first injection hole flows toward the circumferential part of the combustion chamber, and the speed at which the fuel injected from the second injection hole flows toward the circumferential part of the combustion chamber, can be set easily with the simple structure.

Particularly, the passage-forming member is configured to flow the fuel injected from the first injection hole toward the circumferential part of the combustion chamber faster than the fuel injected from the second injection hole.

Further particularly, the speed at which the fuel injected from the first injection hole flows toward the circumferential part of the combustion chamber is higher than the speed at which the fuel injected from the second injection hole flows toward the circumferential part of the combustion chamber.

### BRIEF DESCRIPTION OF DRAWINGS

Fig. 1 is a longitudinal cross-sectional view illustrating a structure near a combustion chamber of a diesel engine.
Fig. 2 is a schematic view illustrating a layout of passage-forming members when a fuel injection nozzle is seen in an axial direction.
Figs. 3A and 3B are views illustrating the passage-forming member according to Embodiment 1, where Fig. 3A is a cross-sectional view when the passage-forming member is cut along a center axis of the passage, and Fig. 3B is a view of the passage-forming member seen from a downstream side.
Fig. 4 is an imaginary view illustrating a situation in which fuel injected from first injection holes collides with fuel injected from second injection holes.
Figs. 5A and 5B are views illustrating a passage-forming member according to Embodiment 2, where Fig. 5A is a cross-sectional view when the passage-forming member is cut along a center axis of the passage, and Fig. 5B is a view of the passage-forming member seen from a downstream side.
Figs. 6A and 6B are views illustrating a passage-forming member according to Embodiment 3, where Fig. 6A is a cross-sectional view when the passage-forming member is cut along a center axis of the passage, and Fig. 6B is a view of the passage-forming member seen from a downstream side.
Fig. 7 is a cross-sectional view illustrating a passage-forming member according to Embodiment 4 when the passage-forming member is cut along a center axis of the passage.
Fig. 8 is a cross-sectional view illustrating a structure of a passage-forming unit according to Modification 1.
Fig. 9 is a cross-sectional view illustrating a structure of a passage-forming unit according to Modification 2.
Fig. 10 is a longitudinal cross-sectional view illustrating a structure near the combustion chamber of the diesel engine according to Modification 3.
Fig. 11 is a longitudinal cross-sectional view illustrating a structure near the combustion chamber of the diesel engine according to Modification 4.
Fig. 12 is a longitudinal cross-sectional view illustrating a structure near the combustion chamber of the diesel engine according to Modification 5.
Fig. 13 is a longitudinal cross-sectional view illustrating a structure near the combustion chamber of the diesel engine according to Modification 6.

### DETAILED DESCRIPTION

Hereinafter, embodiments to implement the present disclosure are described with reference to the accompanying drawings. The following description of the embodiments is merely illustration, and is not intended to limit the present disclosure, its application, or its use. All of the features as shown in the drawings may not necessarily be essential.

### <1. Embodiment 1>

### <1-1. Outline Structure of Combustion Chamber of Engine>

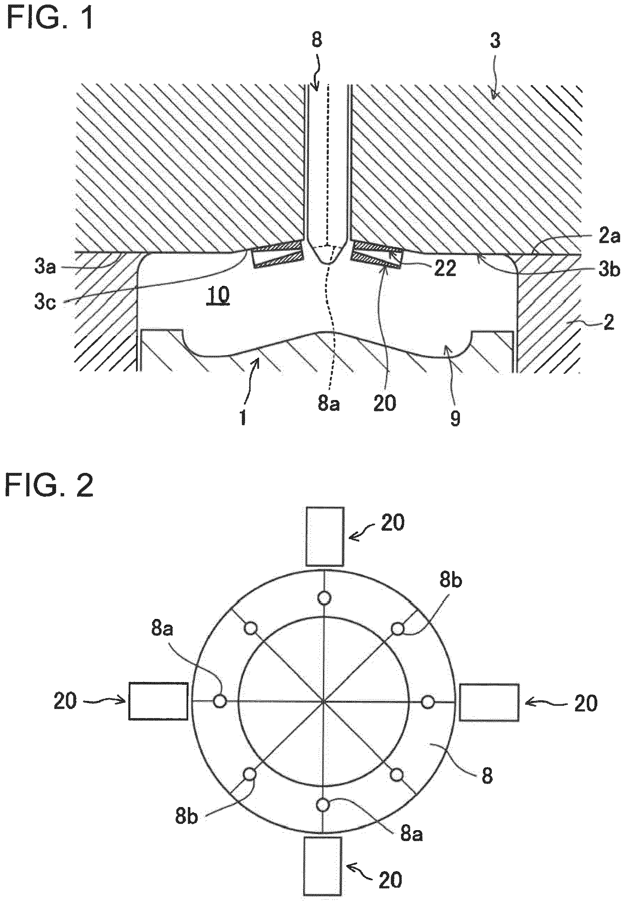

Below, an outline structure of a combustion chamber of an engine, particularly a diesel engine in a direct-injection type according to this embodiment is described with reference to Fig. 1. Fig. 1 is a longitudinal cross-sectional view particularly illustrating a structure near a combustion chamber 10 of the direct-injection-type engine, particularly direct-injection-type diesel engine. The diesel engine is provided with pistons 1, a cylinder block 2, and a cylinder head 3 each made of particularly aluminum alloy, and is further provided with intake valves (not illustrated), intake ports (not illustrated), exhaust valves (not illustrated), exhaust ports (not illustrated), and fuel injection nozzles 8.

Each piston 1 is particularly formed with a cavity 9 in a top surface of the piston 1. The cylinder block 2 is provided with one or more cylinders. The cylinder block 2 is particularly formed, in its upper-end surface, with a mating surface 2a to be connected to the cylinder head 3. Although not illustrated, the cylinder head 3 is particularly formed with the intake ports and the exhaust ports, and the intake valves and the exhaust valves are provided to the intake ports and the exhaust ports, respectively, so as to be openable and/or closeable. Moreover, the fuel injection nozzles 8 are particularly attached to the cylinder head 3. The cylinder head 3 is particularly formed, in its lower-end surface, with a mating surface 3a to be connected to the cylinder block 2. The cylinder head 3 and the cylinder block 2 are particularly mated with each other by the mating surfaces 3a and 2a, and the piston 1 is accommodated inside the cylinder, so that the combustion chamber 10 is defined between the cylinder head 3 and the piston 1.

In detail, the combustion chamber 10 of the diesel engine is mainly defined particularly by the top surface (the cavity 9) of the piston 1, an inner-wall surface of the cylinder block 2, a combustion-chamber ceiling surface 3b surrounded by the mating surface 3a of the cylinder head 3, and umbrella parts of the intake valve and the exhaust valve.

In the diesel engine described above, propulsive force is obtained from an explosion caused in the combustion chamber 10 by fuel being injected from the fuel injection nozzle 8 into the combustion chamber 10 during a compression stroke (e.g., in a latter half of the compression stroke) and spontaneously ignited. Then, the piston 1 reciprocates inside the cylinder by the propulsive force so that the reciprocating motion of the piston 1 is converted into a rotating motion of a crank shaft (not illustrated) via a rod (not illustrated) to obtain a motive force.

### <1-2. Configuration of Fuel Injection Nozzle>

Each fuel injection nozzle 8 is particularly attached to the cylinder head 3 so that a tip-end part of the fuel injection nozzle 8 is exposed to the combustion chamber 10. A plurality of injection holes are arranged at the tip-end part of the fuel injection nozzle 8 particularly at even intervals in the circumferential direction centering on an axis of the fuel injection nozzle 8. In this embodiment, eight injection holes are particularly provided to the tip-end part of the fuel injection nozzle 8. The eight injection holes particularly include four first injection holes 8a and four second injection holes 8b (both will be described later). However, the number of injection holes 8a and 8b is not limited to this, but may be seven or less, or nine or more as a total. The center axis of each of the injection holes 8a and 8b extends radially outwardly and obliquely downwardly with respect to the center axis of the cylinder. When seen as a whole, the eight injection holes 8a and 8b are particularly provided so that fuel is injected radially outwardly with respect to the center axis of the combustion chamber 10.

### <1-3. Configuration of Passage-forming Member>

In the diesel engine of this embodiment, one or more, particularly four passage-forming members 20 are provided corresponding to the first injection holes 8a (the half of the eight injection holes 8a and 8b provided to the fuel injection nozzle 8). As illustrated in Fig. 2, the four passage-forming members 20 are particularly provided corresponding to the four first injection holes 8a which are disposed alternately in the circumferential direction centering on the center axis (axis) of the fuel injection nozzle 8. Particularly, the first injection holes 8a and the second injection holes 8b (described later) are alternately disposed with a gap therebetween in the circumferential direction centering on the center axis of the fuel injection nozzle 8.

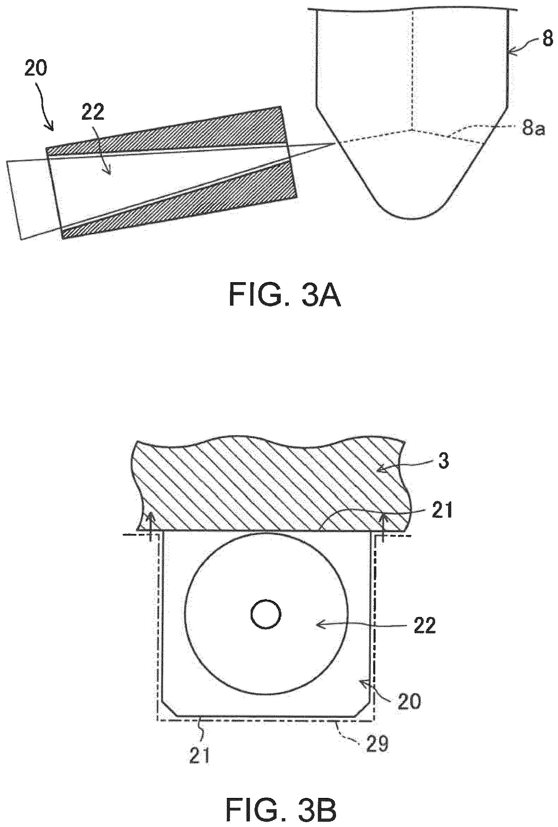

Figs. 3A and 3B are views illustrating the passage-forming member 20 according to this embodiment. As illustrated in Fig. 3A, the passage-forming member 20 is particularly formed with a passage through which fuel injected from the first injection hole 8a passes. The passage is particularly formed from an upstream end to a downstream end of the passage-forming member 20 in a passing direction of the fuel. As illustrated in Fig. 1, a center axis of the passage in the passage-forming member 20 is particularly aligned with the center axis of the corresponding first injection hole 8a.

As illustrated in Fig. 3B, the passage-forming member 20 particularly has a substantially square-tubular external shape. That is, the passage-forming member 20 particularly has a plurality of flat parts 21 on its outer circumferential surface. One of these flat parts 21 contacts a concave part 3c in the combustion-chamber ceiling surface 3b of the cylinder head 3 to be attached to the cylinder head 3 in a substantially surface-contacting state. The concave part 3c particularly accommodates a part of the passage-forming member 20.

As illustrated in Fig. 1, the passage-forming member 20 of this embodiment is particularly attached to the concave part 3c surrounding the fuel injection nozzle 8, in the combustion-chamber ceiling surface 3b of the cylinder head 3. The concave part 3c particularly inclines centering on the position of the fuel injection nozzle 8 so as to have substantially the same inclination as the center axis of the first injection hole 8a, and has a space of a substantially cone or conical shape. By the flat part 21 of the passage-forming member 20 being in contact with the inclined surface of the concave part 3c, the passage-forming member 20 is particularly fixed to the concave part 3c in a substantially surface-contacting state. Various known methods, such as welding, soldering, or screwing, may be used for attaching the passage-forming member 20 to the concave part 3c. Alternatively, as illustrated in Fig. 3B, in a state where the flat part 21 is contacting the inclined surface of the concave part 3c, the flat part 21 opposite from the attached side of the passage-forming member 20, and a part of the combustion-chamber ceiling surface 3b may be covered by a cover 29, and the cover 29 may be fixed by screw(s) or bolt(s) to the combustion-chamber ceiling surface 3b. Accordingly, the passage-forming member 20 may be attached to the concave part 3c.

As illustrated in Fig. 3A, the passage of the passage-forming member 20 according to this embodiment includes an enlarged part 22. In the enlarged part 22, a cross-sectional area of the passage increases, continuously increases, or gradually increases from the upstream side to the downstream side. Note that as illustrated in Fig. 3B, the cross section of the passage of the passage-forming member 20 of this embodiment is circular. Therefore, the enlarged part 22 has an inner surface of a substantially cone or conical shape. Moreover, in this embodiment, a part with the smallest cross-sectional area constitutes the upstream end of the passage in the passage-forming member 20, and a part with the largest cross-sectional area constitutes the downstream end of the passage in the passage-forming member 20. As illustrated in Fig. 3A, an inner surface of the enlarged part 22 of this embodiment particularly has a linear shape when cut along the center axis of the passage of the passage-forming member 20.

In the structure of the combustion chamber of the diesel engine according to this embodiment, fuel injected from the first injection hole 8a of the fuel injection nozzle 8 passes through the passage-forming member 20 so as to flow toward a circumferential part of the combustion chamber 10 particularly at a first speed. On the other hand, fuel injected from the second injection hole 8b of the fuel injection nozzle 8 is not allowed to pass through the passage-forming member 20 so as to flow toward the circumferential part of the combustion chamber 10 particularly at a second speed lower than the first speed. In other words, the structure of the combustion chamber of the diesel engine according to this embodiment is provided with the passage-forming member 20 (see Fig. 2) formed with the fuel passage which particularly causes a difference between the speed at which the fuel injected from the first injection hole 8a flows toward the circumferential part of the combustion chamber 10, and the speed at which the fuel injected from the second injection hole 8b flows toward the circumferential part of the combustion chamber 10. The passage-forming member 20 is particularly disposed around the tip-end part of the fuel injection nozzle 8.

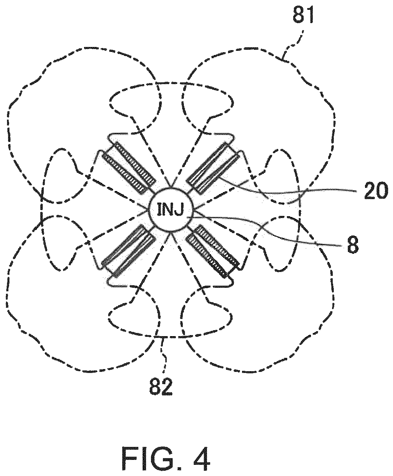

In the structure of the combustion chamber of the diesel engine configured as described above, when fuel is injected from the injection holes 8a and 8b of the fuel injection nozzle 8 during the compression stroke (e.g., in a latter half of the compression stroke), part of the fuel enters the passage of the passage-forming member 20 particularly disposed coaxially with the first injection hole 8a. Particularly, the circular cross section of the passage of the passage-forming member 20 is disposed coaxially with the first injection hole 8a. The fuel which entered into the passage from the upstream end of the passage-forming member 20 is particularly acted upon by the Coanda effect to flow along the inner surface of the passage-forming member 20, and thus, the Coanda effect causes the flow of the fuel toward the downstream end of the passage-forming member 20 along the substantially cone-shaped or conical shaped inner surface of the enlarged part 22. That is, the fuel passing through the passage of the passage-forming member 20 is particularly caused to flow from the upstream end to the downstream end along the inner surface of the enlarged part 22 by the Coanda effect, while spreading radially outwardly with respect to the center axis of the passage. By the fuel passing through the passage-forming member 20, it particularly flows faster than the case of not passing through the passage-forming member 20. This is because, inside the passage of the passage-forming member 20, air (which becomes resistance) is difficult to be caught in the fuel spray. Moreover, when the fuel is discharged from the passage-forming member 20, it becomes easier for the fuel to spread radially outward of the passage from the downstream end of the enlarged part 22. As a result, the fuel after passing through the passage-forming member 20 flows toward the circumferential part of the combustion chamber 10 at the higher speed, and is mixed with air inside the combustion chamber 10. The fuel injected from the second injection hole 8b of the fuel injection nozzle 8 flows toward the circumferential part of the combustion chamber 10 at the lower speed than the fuel which is injected from the first injection hole 8a and passed through the passage-forming member 20, and collides with the fuel priorly mixed with air. Accordingly, spatial turbulence of the fuel spray occurs inside the combustion chamber 10. As a result, the entire fuel is efficiently mixed with air inside the combustion chamber 10. Fig. 4 illustrates a situation in which fuel injected from the first injection holes 8a and fuel injected from the second injection holes 8b collide and are mixed with each other. Two-dot chain lines in Fig. 4 indicate a spread of the fuel (fuel spray 81) injected from the first injection holes 8a. One-dot chain lines in Fig. 4 indicate a spread of the fuel (fuel spray 82) injected from the second injection holes 8b.

Moreover, as illustrated in Fig. 1, the passage-forming member 20 according to this embodiment is disposed at the concave part 3c formed in the combustion-chamber ceiling surface 3b of the cylinder head 3. Therefore, for example, attaching the passage-forming member 20 to be received by the cover 29 becomes easier, and thereby, the passage-forming member 20 is unlikely to fall off. Moreover, it becomes possible to bring top dead center of the piston 1 disposed in the cylinder block 2 closer to the cylinder head 3, which can increase a compression ratio of the diesel engine.

### <2. Embodiment 2>

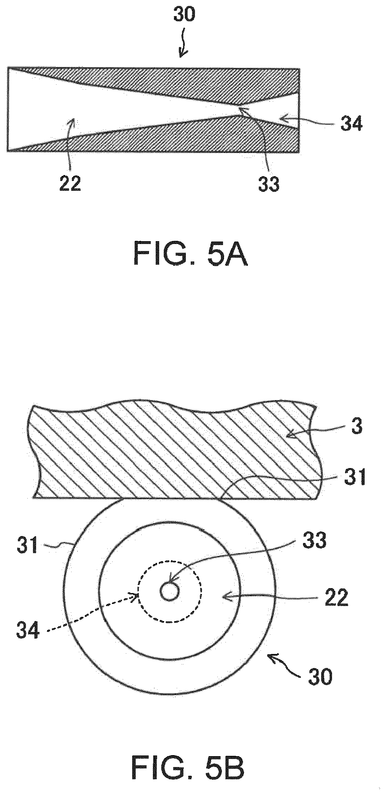

Below, an outline structure of the combustion chamber 10 of the diesel engine according to Embodiment 2 is described with reference to Figs. 5A and 5B. A structure of the combustion chamber of the diesel engine according to Embodiment 2 is different from that of Embodiment 1, in that it is provided with a passage-forming member 30 instead of the passage-forming member 20. The points different from Embodiment 1 are mainly described below.

### <2-1. Configuration of Passage-forming Member>

The passage-forming members 30 are provided in the same number as the injection holes 8a so as to correspond to each other. Each passage-forming member 30 has a substantially cylindrical external shape. In detail, the external shape of the passage-forming member 30 is such that a part of a cylindrical outer circumferential surface is scraped off to form a flat part 31. The flat part 31 constitutes a plane surface parallel to the center axis of a passage in the passage-forming member 30.

As illustrated in Fig. 5A, the passage-forming member 30 of this embodiment particularly includes a narrowed part 34 in addition to the enlarged part 22, and is provided with a narrowest part 33 between the enlarged part 22 and the narrowed part 34. The narrowed part 34 is disposed upstream of the enlarged part 22 in the passage of the passage-forming member 30, that is, continues from the upstream end of the enlarged part 22. The cross-sectional area of the narrowed part 34 reduces, continuously reduces, or gradually reduces to the downstream side. That is, the cross-sectional area of the narrowed part 34 increases, continuously increases, or gradually increases as separating from the enlarged part 22. Note that as illustrated in Fig. 5B, the cross section of the passage of the narrowed part 34 of this embodiment is circular. Therefore, the narrowed part 34 particularly has an inner surface in an inverted conical shape. Moreover, in this embodiment, a part of the narrowed part 34 with the largest cross-sectional area thereof particularly constitutes the upstream end of the passage in the passage-forming member 30, and a part of the enlarged part 22 with the largest cross-sectional area thereof particularly constitutes the downstream end of the passage in the passage-forming member 30. As illustrated in Fig. 5A, the inner surface of the passage-forming member 30 of this embodiment has a linear shape bent at its intermediate part when cut along the center axis of the passage. The intermediate part of the inner surface at which the inner surface is bent, is a part including the range with the smallest cross-sectional area, and constitutes the narrowest part 33.

In the structure of the combustion chamber of the diesel engine configured as described above, when fuel is injected during the compression stroke from the injection holes 8a and 8b of the fuel injection nozzle 8, part of the fuel enters into the passage of the passage-forming member 30 particularly disposed coaxially with the first injection hole 8a. The fuel that has entered the passage from the upstream end of the passage-forming member 30, flows toward the narrowest part 33 while accelerating along the inner surface of the narrowed part 34. The cross-sectional area of the passage in the passage-forming member 30 through which the fuel passes, is reduced at the narrowed part 34 and the narrowest part 33. Accordingly, turbulence occurs to the flow of the fuel as a result of the fuel passing through the narrowed part 34, thereby the fuel easily being split finely. In detail, by the fuel passing through the narrow passage of the narrowed part 34 and the narrowest part 33, the entire flow of the fuel including the central part (core part) is disturbed (i.e., turbulence is generated). Therefore, the fuel including the center part of the fuel which is conventionally difficult to be split, is easily homogenized in its concentration. The fuel after passing through the narrowest part 33 is acted upon by the Coanda effect to flow along the inner surface of the passage-forming member 30 so that the fuel flows toward the downstream along the inner surface of the enlarged part 22. By the fuel passing through the enlarged part 22, it flows faster than the case of not passing thorough the passage-forming member 30. Moreover, since the cross-sectional area of the enlarged part 22 increases, continuously increases, or gradually increases toward the downstream end of the passage, the fuel easily flows toward the downstream end while spreading by the Coanda effect. As a result, the fuel is homogenized in its concentration, and mixing of the fuel with air inside the combustion chamber 10 is facilitated. The fuel injected from the second injection hole 8b of the fuel injection nozzle 8 flows toward the circumferential part of the combustion chamber 10 at the lower speed than the fuel which is injected from the first injection hole 8a and passed through the passage-forming member 30, and collides with the fuel priorly mixed with air. Accordingly, spatial turbulence of the fuel spray occurs inside the combustion chamber 10. As a result, the entire fuel is efficiently mixed with air inside the combustion chamber 10. Thus, unburnt fuel is unlikely to be generated, which improves emissions.

Particularly, in the passage-forming member 30 of this embodiment, as illustrated in Fig. 5A, the narrowest part 33, which is the border between the enlarged part 22 and the narrowed part 34, is positioned upstream of the midpoint of the passage in the passage-forming member 30. Accordingly, the narrowed part 34 is also positioned upstream of the midpoint of the passage in the passage-forming member 30. Therefore, a sufficient length of the enlarged part 22 can be easily secured on the downstream of the narrowest part 33. As a result, the fuel after being homogenized in its concentration at the narrowed part 34 and the narrowest part 33, is more easily affected by the Coanda effect. Moreover, since the cross-sectional area of the passage at the downstream end of the enlarged part 22 is sufficiently increased, when the fuel is discharged from the enlarged part 22, it can sufficiently spread radially outward of the passage of the passage-forming member 30. Accordingly, unburnt fuel is unlikely to be generated, which improves the emissions.

### <3. Embodiment 3>

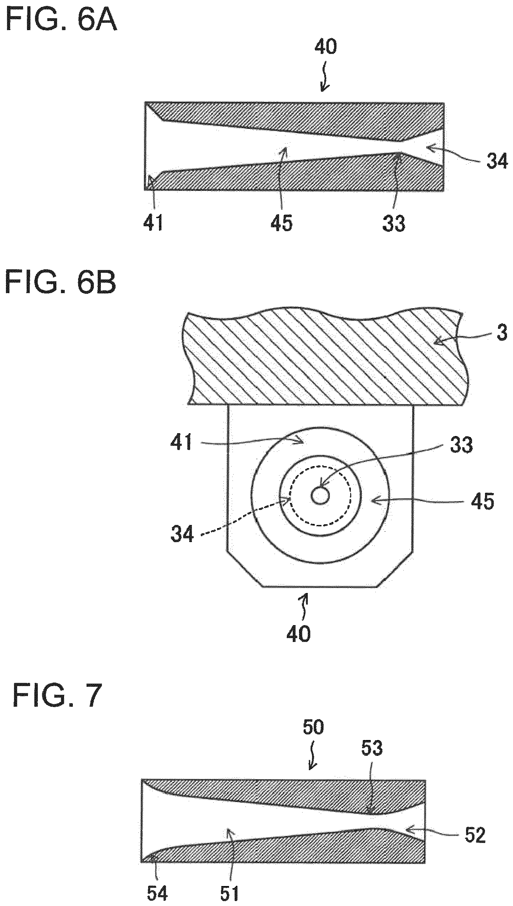

Below, an outline structure of the combustion chamber 10 of the diesel engine according to Embodiment 3 is described with reference to Figs. 6A and 6B. A structure of the combustion chamber of the diesel engine according to Embodiment 3 is different from that of Embodiment 2, in that it is provided with a passage-forming member 40 instead of the passage-forming member 30. The points different from Embodiment 2 are mainly described below.

As illustrated in Fig. 6A, the passage-forming member 40 is different from the passage-forming member 30 according to Embodiment 2, in that it includes a first enlarged part 45 and a second enlarged part 41 as the enlarged part. The passage-forming member 20 of Embodiment 1 may include the first enlarged part 45 and/or the second enlarged part 41, similarly to Embodiment 3.

The first enlarged part 45 is disposed downstream of the narrowed part 34 in the passage of the passage-forming member 40, to be continued from the narrowed part 34. In other words, the first enlarged part 45 is particularly provided immediately downstream of the narrowed part 34. A cross-sectional area of the first enlarged part 45 increases, continuously increases, or gradually increases as separating from the narrowed part 34.

The second enlarged part 41 is particularly disposed downstream of the first enlarged part 45 in the passage of the passage-forming member 40, to be continued from the first enlarged part 45. In other words, the second enlarged part 41 is particularly provided immediately downstream of the first enlarged part 45. A cross-sectional area of the second enlarged part 41 increases, continuously increases, or gradually increases as separating from the first enlarged part 45. In detail, in the second enlarged part 41, a rate of increase in the cross-sectional area to the downstream side of the passage is higher than that of the first enlarged part 45. Note that as illustrated in Fig. 6B, a cross section of the passage of the second enlarged part 41 of this embodiment is circular. Therefore, the second enlarged part 41 has an inner surface of a truncated cone-like shape or a truncated conical shape. Moreover, in this embodiment, a part of the second enlarged part 41 with the largest cross-sectional area particularly constitutes the downstream end of the passage in the passage-forming member 40. As illustrated in Fig. 6A, an inner surface of the passage-forming member 40 of this embodiment has a linear shape bent at two locations of its intermediate part when cut along the center axis of the passage.

In the structure of the combustion chamber of the diesel engine configured as described above, when fuel is injected during a compression stroke from the injection holes 8a and 8b of the fuel injection nozzle 8, part of the fuel enters into the passage of the passage-forming member 40 particularly disposed coaxially with the first injection hole 8a. The fuel that has entered the passage from the upstream end of the passage-forming member 40, passes through the narrowed part 34 and the narrowest part 33 to be homogenized in its concentration. The fuel after passing through the narrowed part 34 and the narrowest part 33 is acted upon by the Coanda effect to flow along the inner surface of the passage-forming member 40. Therefore, the fuel flows toward the second enlarged part 41 on the downstream side along the inner surface of the first enlarged part 45. Furthermore, the fuel flows toward the downstream along the inner surface of the second enlarged part 41 while spreading radially outwardly with respect to the center axis of passage, and when the fuel is discharged from the downstream end of the passage of the second enlarged part 41, it further spreads radially outward of the passage of the passage-forming member 40 by the Coanda effect. Particularly, the inner surface of the second enlarged part 41 inclines nearly perpendicularly to the center axis of the passage in the passage-forming member 40 such that the fuel is discharged nearly perpendicularly with respect to the center axis of the passage-forming member 40. As a result, the mixing of fuel with air inside the combustion chamber 10 is facilitated more. The fuel injected from the second injection hole 8b of the fuel injection nozzle 8 flows toward the circumferential part of the combustion chamber 10 at the speed lower than the speed at which the fuel injected from the first injection hole 8a passes through the passage-forming member 40 and flows toward the circumferential part of the combustion chamber 10, and collides with the fuel priorly mixed with air. Accordingly, spatial turbulence of the fuel spray occurs inside the combustion chamber 10. As a result, the entire fuel is efficiently mixed with air inside the combustion chamber 10. Thus, unburnt fuel is unlikely to be generated, which improves emissions.

### <4. Embodiment 4>

Below, an outline structure of the combustion chamber 10 of the diesel engine according to Embodiment 4 is described with reference to Fig. 7. A structure of the combustion chamber of the diesel engine according to Embodiment 4 is different from that of Embodiment 3, in that it is provided with a passage-forming member 50 instead of the passage-forming member 40. The points different from Embodiment 3 are mainly described below.

The passage-forming member 50 is provided with a first enlarged part 51, a narrowed part 52, a narrowest part 53, and a second enlarged part 54, instead of the first enlarged part 45, the narrowed part 34, the narrowest part 33, and the second enlarged part 41, respectively.

As illustrated in Fig. 7, a cross-sectional area of the first enlarged part 51 increases, continuously increases, or gradually increases from the upstream side to the downstream side of the passage. The narrowed part 52 is provided immediately upstream of the first enlarged part 51. A cross-sectional area of the narrowed part 52 increases, continuously increases, or gradually increases as separating from the first enlarged part 51. The second enlarged part 54 is provided immediately downstream of the first enlarged part 51. A rate of increase in a cross-sectional area of the second enlarged part 54 to the downstream side, is higher than that of the first enlarged part 51.

As illustrated in Fig. 7, in this embodiment, particularly, the narrowed part 52 and the first enlarged part 51 of the passage-forming member 50, and the first enlarged part 51 and the second enlarged part 54, are smoothly connected to each other, respectively. That is, each of a border between the narrowed part 52 and the first enlarged part 51, and a border between the first enlarged part 51 and the second enlarged part 54, forms a curve or a smooth curve by their inner surfaces when the passage-forming member 50 is cut along the center axis of the passage. In this manner, the first enlarged part 51 and the second enlarged part 54 are smoothly connected to each other.

According to the passage-forming member 50 configured as described above, fuel more easily flows along the inner surface of the passage-forming member 50. Therefore, the fuel easily and more promptly flows by the Coanda effect inside the passage-forming member 50 without stagnation. Moreover, when the fuel is discharged from the second enlarged part 54 of the passage-forming member 50, the fuel more easily spreads radially outward of the passage of the passage-forming member 50. The fuel injected from the second injection hole 8b of the fuel injection nozzle 8 flows toward the circumferential part of the combustion chamber 10 at the lower speed than the speed at which the fuel injected from the first injection hole 8a passes through the passage-forming member 50 and flows toward the circumferential part of the combustion chamber 10, and collides with the fuel priorly mixed with air. Accordingly, spatial turbulence of the fuel spray occurs inside the combustion chamber 10. As a result, the entire fuel is efficiently mixed with air inside the combustion chamber 10. Thus, unburnt fuel is unlikely to be generated, which improves emissions.

Although the embodiments of the present disclosure are described above as examples, the present disclosure is not limited to the above embodiments. Any one of the above Embodiment 1 to may be combined with any one of the following Modification 1 to 6.

### <5. Modification 1>

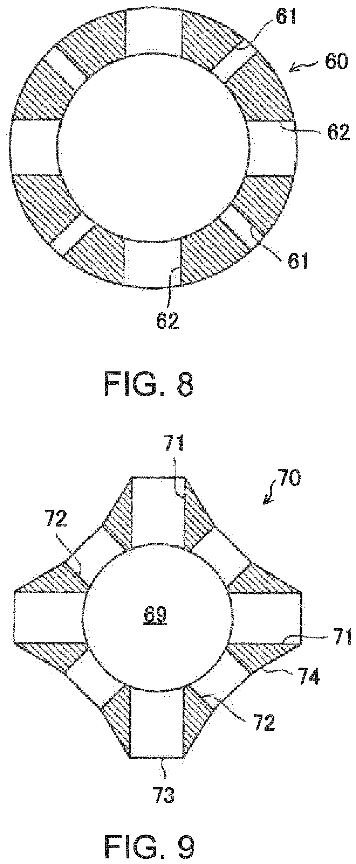

Although in the embodiments described above each passage-forming member is independently fixed to the concave part 3c formed in the combustion-chamber ceiling surface 3b of the cylinder head 3, it is not limited to this. Moreover, although in the above embodiments a passage-forming member is not provided corresponding to the second injection hole 8b, it is not limited to this. For example, a first passage-forming part (first passage-forming member) which is provided corresponding to the first injection hole 8a, and a second passage-forming part (second passage-forming member) which is provided corresponding to the second injection hole 8b, may be integrally formed in a common passage-forming unit. A reference character 60 in Fig. 8 illustrates an example of such a passage-forming unit. Fig. 8 is a transverse cross-sectional view illustrating a structure of the passage-forming unit 60 according to Modification 1.

The passage-forming unit 60 particularly has a circular ring shape with a given thickness. The passage-forming unit 60 is formed with four first passages 61 positioned at every 90 degrees so as to radially penetrate an inner circumferential surface and an outer circumferential surface of the passage-forming unit 60. The first passage 61 is an example of the passage of the first passage-forming member. A cross section of each first passage 61 is circular. Moreover, the passage-forming unit 60 is particularly formed with four second passages 62 positioned at every 90 degrees or about 90 degrees so as to radially penetrate the inner circumferential surface and the outer circumferential surface of the passage-forming unit 60. The second passage 62 is an example of the passage of the second passage-forming member. Each second passage 62 is particularly disposed at an angular position middle between the adjacent first passages 61 in a circumferential direction. A cross section of each second passage 62 is circular which is larger than that of the first passage 61. The passage-forming unit 60 is attached so that the first passage 61 is opposed to the first injection hole 8a, the second passage 62 is opposed the second injection hole 8b, and the entire circumference of the fuel injection nozzle 8 is surrounded by the passage-forming unit 60. In detail, an end surface of the passage-forming unit 60 on one side in its the axial direction, is particularly attached to the concave part 3c in the combustion-chamber ceiling surface 3b of the cylinder head 3 in a substantially surface-contacting state or a line-contacting state, by known methods (e.g., welding or screwing).

Also in this manner, fuel which passed through the first passage 61 (first passage-forming part) and fuel which passed through the second passage 62 (second passage-forming part) flow with a time difference, and collide with each other, and thus, the entire fuel is mixed easily. Note that fuel flows faster in the first passage 61 with the smaller cross section, compared to in the second passage 62. This is because an amount of air which flows into the passage increases as the cross section of the passage (hole diameter) increases, and air resistance to the fuel increases accordingly.

Moreover, since the four first passages 61 and the four second passages 62 are held by the common passage-forming unit 60, a positional relationship between the injection holes 8a and 8b, and the passages 61 and 62, respectively, can be easily and simultaneously determined.

### <6. Modification 2>

A reference character 70 of Fig. 9 illustrates another example of the passage-forming unit. Fig. 9 is a transverse cross-sectional view illustrating a structure of a passage-forming unit 70 according to Modification 2.

Schematically, the passage-forming unit 70 is a substantially octagon shape alternately having short sides 73 and long sides 74. The passage-forming unit 70 has a given thickness, and its axial part is a cylindrical hollow part 69. The passage-forming unit 70 is particularly formed with four first passages 71 positioned at every 90 degrees or about 90 degrees so as to radially communicate the short side 73 and the hollow part 69. The first passage 71 is an example of the passage of the first passage-forming member. Moreover, the passage-forming unit 70 is particularly formed with four second passages 72 positioned at every 90 degrees so as to radially communicate the center part of the long side 74 and the hollow part 69. The second passage 72 is an example of the passage of the second passage-forming member. Cross sections of the first passage 71 and the second passage 72 are substantially the same. The length of the first passage 71 (L1) is longer than the length of the second passage (L2) (L1>L2). The passage-forming unit 70 is attached so that the first passage 71 is opposed to the first injection hole 8a and the second passage 72 is opposed to the second injection hole 8b, and the entire circumference of the fuel injection nozzle 8 is surrounded by the passage-forming unit 70. In detail, an end surface of the passage-forming unit 70 on one side in its axial direction, is attached to the concave part 3c in the combustion-chamber ceiling surface 3b of the cylinder head 3 in a substantially surface-contacting state or a line-contacting state, by known methods (e.g., welding or screwing).

Also in this manner, fuel which passed through the first passage 71 (first passage-forming part) and fuel which passed through the second passage 72 (second passage-forming part) flow with a time difference, and collide with each other, and thus, the entire fuel is mixed easily. Note that fuel flows faster in the first passage 71 with the longer length L1 compared to in the second passage 72 with the shorter length L2, due to a difference in air resistance caused by a difference in a period of time during which air and fuel are in contact with each other. Moreover, since the four first passages 71 and the four second passages 72 are held by the common passage-forming unit 70, a positional relationship between the injection holes 8a and 8b, and the passages 71 and 72, respectively, can be easily and simultaneously determined.

### <7. Modification 3>

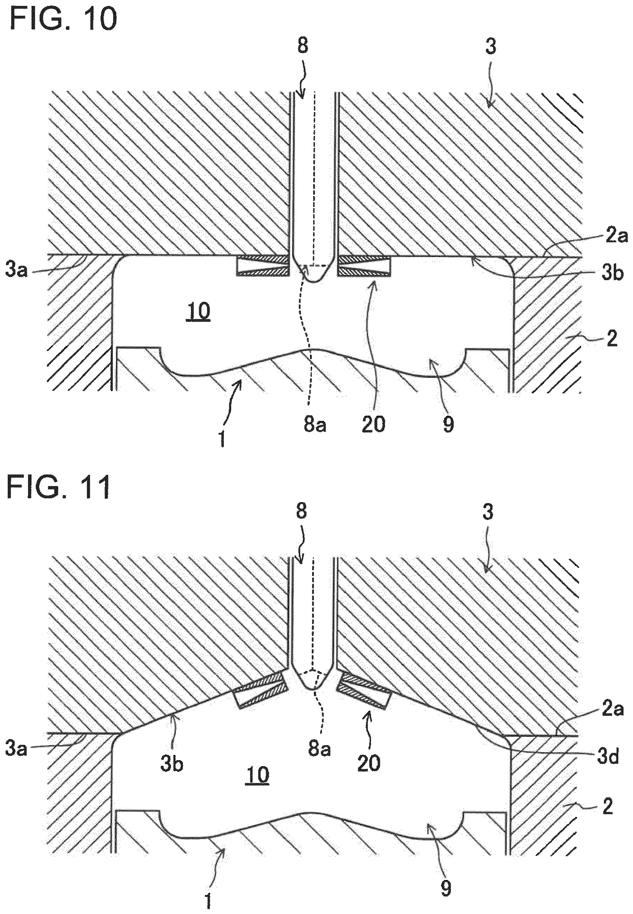

In the embodiments described above, the passage-forming member is disposed at the concave part 3c formed in the combustion-chamber ceiling surface 3b of the cylinder head 3. However, instead of this, the passage-forming member may be disposed at a position other than the concave part 3c in the combustion-chamber ceiling surface 3b. Such an example is illustrated in Fig. 10. Fig. 10 is a longitudinal cross-sectional view illustrating a structure near the combustion chamber of the diesel engine according to Modification 3. As illustrated in Fig. 10, also in this case, the center axis of the injection hole 8a is particularly disposed to be substantially aligned with the center axis of the passage-forming member 20.

### <8. Modification 4>

Alternatively, the passage-forming member may be disposed on a combustion-chamber ceiling surface of a pent-roof type, of the cylinder head 3. Such an example is illustrated in Fig. 11. A reference character 3d in Fig. 11 indicates a ceiling surface of the pent-roof type. As illustrated in Fig. 11, also in this case, the center axis of the injection hole 8a is particularly disposed to be substantially aligned with the center axis of the passage-forming member 20.

### <9. Modification 5>

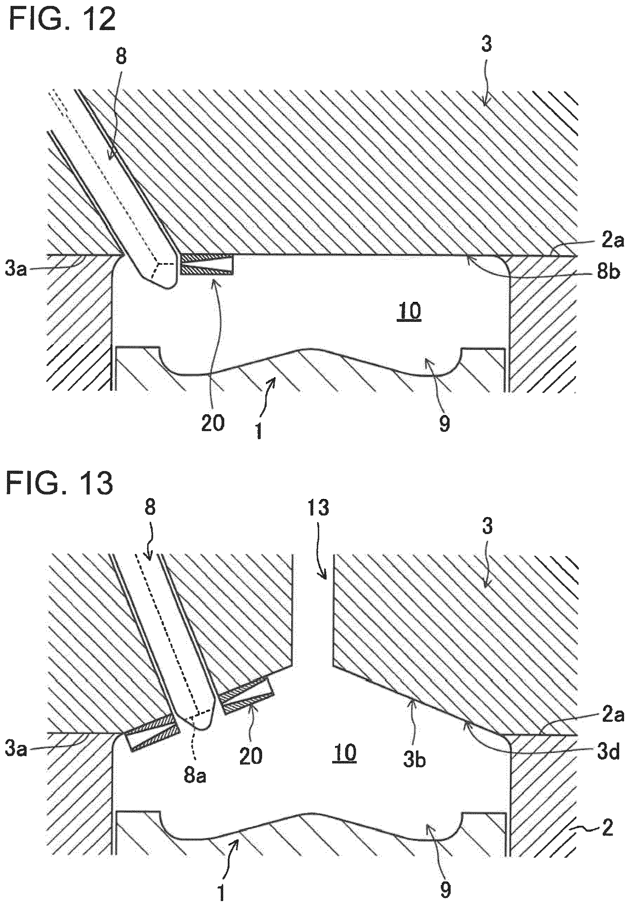

As illustrated in Fig. 12, the fuel injection nozzle 8 may be provided incliningly with respect to the center axis of the cylinder, so that fuel injected from the injection hole 8a of the fuel injection nozzle 8 spreads perpendicularly to the center axis of the cylinder. In this case, the passage-forming member 20 may be directly attached to the combustion-chamber ceiling surface 3b which is perpendicular to the center axis of the cylinder.

### <10. Modification 6>

A glowplug attachment hole may be provided to the cylinder head 3 so that a glowplug is attached to the glowplug attachment hole. Such an example is illustrated in Fig. 13. Fig. 13 is a longitudinal cross-sectional view illustrating a structure near the combustion chamber of the diesel engine according to Modification 6. A reference character 13 in Fig. 13 indicates the glowplug attachment hole. In the example of Fig. 13, the tip-end part of the fuel injection nozzle 8 is disposed at a position separated from an opening of the glowplug attachment hole 13, and the passage-forming members 20 are disposed on the combustion-chamber ceiling surface 3d of the pent-roof type so as to surround the tip-end part of the fuel injection nozzle 8.

### <11. Other Embodiments>

In the embodiments described above, the flat part 21 is formed in the outer circumferential part of the passage-forming member 20, and the flat part 21 contacts the concave part 3c in the combustion-chamber ceiling surface 3b of the cylinder head 3 so as to be attached to the concave part 3c in the substantially surface-contacting state. However, it is not limited to this. The flat part may not be formed in the passage-forming member, and an outer circumferential surface of the passage-forming member may be line-contacted with the concave part 3c so that the passage-forming member is attached to the concave part 3c in this state.

Although in the embodiments described above the passage-forming member is directly attached to the concave part 3c in the combustion-chamber ceiling surface 3b of the cylinder head 3, it is not limited to this. Instead of this, the passage-forming member may be accommodated in a cylindrical holder, and the holder may be fixed to the concave part 3c in the combustion-chamber ceiling surface 3b of the cylinder head 3 by a fastening member (e.g., a screw or a bolt).

A plurality of (e.g., two) types of passage-forming members (passage-forming parts) may be disposed alternately in the circumferential direction around the fuel injection nozzle 8. Accordingly, the difference between the speed at which the fuel injected from the first injection hole 8a flows toward the circumferential part of the combustion chamber 10, and the speed at which the fuel injected from the second injection hole 8b flows toward the circumferential part of the combustion chamber 10 can be set freely. However, the passage-forming members of a common (single) type may be disposed corresponding to all of the injection holes 8a and 8b of the fuel injection nozzle 8. Also in this manner, the effect of facilitating the mixing of fuel with air inside the combustion chamber 10 can be achieved.

The engine is not necessarily limited to the diesel engine, but the present disclosure is also applicable to gasoline engines. For example, in the example of Fig. 13, the reference character 13 may indicate an ignition plug attachment hole instead of the glowplug attachment hole.

Moreover, the elements described in the above embodiments and modifications may suitably be combined so long as a contradiction does not arise. For example, in the passage-forming unit 60, two types of passage-forming members 40 with different passage cross-sectional areas may be provided as the first passage-forming part and the second passage-forming part, at positions corresponding to the first passage 61 and the second passage 62, respectively.

The present disclosure is applicable to a structure of a combustion chamber of an engine.

It should be understood that the embodiments herein are illustrative and not restrictive, since the scope of the invention is defined by the appended claims rather than by the description preceding them.

### DESCRIPTION OF REFERENCE CHARACTERS

- 1: Piston
- 2: Cylinder Block
- 2a: Mating Surface
- 3: Cylinder Head
- 3a: Mating Surface
- 3b: Combustion-chamber Ceiling Surface
- 3c: Concave Part
- 8: Fuel Injection Nozzle
- 8a: Injection Hole
- 10: Combustion Chamber
- 20: Passage-forming Member
- 21: Flat Part
- 22: Enlarged Part
- 29: Cover
- 30: Passage-forming Member
- 31: Flat Part
- 33: Narrowest Part
- 34: Narrowed Part
- 40: Passage-forming Member
- 41: Second Enlarged Part
- 45: First Enlarged Part
- 50: Passage-forming Member
- 51: First Enlarged Part
- 52: Narrowed Part
- 53: Narrowest Part
- 54: Second Enlarged Part
- 60: Passage-forming Unit
- 61: First Passage (First Passage-forming Part)
- 62: Second Passage (Second Passage-forming Part)
- 70: Passage-forming Unit
- 71: First Passage (First Passage-forming Part)
- 72: Second Passage (Second Passage-forming Part)

## Claims

1. An engine, comprising:
a combustion chamber (10) defined by a cylinder head (3) and a piston inside a cylinder of a cylinder block (2);
a fuel injection nozzle (8) provided to the cylinder head (3) and formed in a tip-end part with a plurality of injection holes from which fuel is injected into the combustion chamber (10), the tip-end part being exposed to the combustion chamber (10); and
a passage-forming member (20, 30, 40, 50) formed with a passage through which the fuel injected from the injection hole passes,
wherein the plurality of injection holes include a first injection hole (8a) and a second injection hole (8b), and
wherein the passage-forming member (20, 30, 40, 50) is disposed around the tip-end part of the fuel injection nozzle (8) so as to cause a difference between a speed at which fuel injected from the first injection hole (8a) flows toward a circumferential part of the combustion chamber (10), and a speed at which fuel injected from the second injection hole (8b) flows toward the circumferential part of the combustion chamber (10).

2. The engine of claim 1, wherein the passage formed in the passage-forming member (20, 30, 40, 50) includes a passage through which only the fuel injected from the first injection hole (8a) passes in a direction of the injection.

3. The engine of claim 1 or 2, wherein the passage of the passage-forming member (20, 30, 40, 50) includes an enlarged part (22) increasing or gradually increasing in a cross-sectional area thereof from an upstream side to a downstream side of the passage.

4. The engine of claim 3, wherein the passage-forming member (20, 30, 40, 50) is formed, in the passage, with a narrowed part (34, 52) on the upstream side of the enlarged part (22) so as to decrease or gradually decrease in a cross-sectional area thereof and continue to an upstream end of the enlarged part (22).

5. The engine of claim 4, wherein the narrowed part (34, 52) is positioned upstream of the midpoint in the passage.

6. The engine of any one of claims 3 to 5, wherein the enlarged part (22) is comprised of:
a first enlarged part (45, 51) increasing or gradually increasing in a cross-sectional area thereof toward the downstream side; and
a second enlarged part (41, 54) provided downstream of the first enlarged part (45, 51) to continue from the first enlarged part (45, 51).

7. The engine of claim 6, wherein a rate of increase of the second enlarged part (41, 45) in a cross-sectional area thereof toward the downstream side is higher than the first enlarged part (45, 51).

8. The engine of claim 6 or 7, wherein the first enlarged part (45, 51) and the second enlarged part (41, 54) are smoothly connected to each other.

9. The engine of any one of the preceding claims,
wherein the cylinder head (3) is formed, in a combustion-chamber ceiling surface of the cylinder head (3), with a concave part (3c) configured to accommodate a part of the passage-forming member (20, 30, 40, 50), and
wherein the passage-forming member (20, 30, 40, 50) is disposed at the concave part (3c).

10. The engine of any one of the preceding claims, further comprising:
a first passage-forming part (61, 71) formed with a passage through which the fuel injected from the first injection hole (8a) passes; and
a second passage-forming part (62, 72) formed with a passage through which the fuel injected from the second injection hole (8b) passes.

11. The engine of claim 10, wherein at least one of a radius and a length is different between the passage of the first passage-forming part (61, 71) and the passage of the second passage-forming part (62, 72).

12. The engine of claim 10 or 11, further comprising a passage-forming unit (60, 70) in a circular ring shape and/or alternately having the first passage-forming part (61, 71) and the second passage-forming part (62, 72) in a circumferential direction.

13. The engine of any one of claims 10 to 12, wherein the first passage-forming part (61, 71) and the second passage-forming part (62, 72) are alternately disposed in a circumferential direction centering on a center axis of the fuel injection nozzle (8).

14. The engine of any one of the preceding claims, wherein the passage-forming member (20, 30, 40, 50) is configured to flow the fuel injected from the first injection hole (8a) toward the circumferential part of the combustion chamber (10) faster than the fuel injected from the second injection hole (8b).

15. The engine of any one of the preceding claims, wherein the engine is a diesel engine.
